# EUROPÄISCHE PATENTSCHRIFT

(11) **EP 1 806 327 B1**
(45) Veröffentlichungstag und Bekanntmachung des Hinweises auf die Patenterteilung: **07.08.2013**
(21) Anmeldenummer: 06025274.9
(22) Anmeldetag: 07.12.2006
(51) Int. Cl.: C03C 17/32, C09D 11/10

(54) **UV-härtende Glasdruckfarbe und UV-härtender Glasdrucklack sowie Verfahren zum Bedrucken von Glassubstraten**
UV hardening glass printing ink and uv hardening glass printing lacquer and method for printing a glass substrate
Encre d'impression sur verre durcissable au rayonnement uv et laque d'impression sur verre durcissable au rayonnement uv, et procédé pour imprimer des substrats en verre

(30) Priorität: 05.01.2006 DE 102006000867
(43) Veröffentlichungstag der Anmeldung: 11.07.2007
(73) Patentinhaber: Marabu GmbH & Co. KG, 71732 Tamm (DE)
(72) Erfinder: Schäfer, Wolfgang, 72160 Horb (DE); Triantafillidis, Dimitros, 74078 Heilbronn (DE)
(74) Vertreter: Wagner, Kilian

(56) Entgegenhaltungen:
- EP-A- 1 431 357
- WO-A-01/07376
- WO-A-01/16239
- WO-A-98/51746
- WO-A-2005/040055
- WO-A1-03/093378
- GB-A- 1 564 543
- US-A- 4 517 243
- US-A1- 3 419 412
- US-A1- 2004 068 027
- DATABASE WPI Week 200005 Derwent Publications Ltd., London, GB; AN 1996-167369 XP002434938 & JP 02 992866 B2 (null) 20. Dezember 1999 (1999-12-20)

## Beschreibung

Die Erfindung betrifft eine UV-härtende Glasdruckfarbe und einen UV-härtenden Glasdrucklack gemäß dem Oberbegriff von Anspruch 1, die Verwendung der UV-härtenden Glasdruckfarbe und des UV-härtenden Glasdrucklacks zum Bedrucken von Glassubstraten gemäß dem Oberbegriff von Anspruch 19 sowie ein Verfahren zum Bedrucken von Glassubstraten mit einer solchen Druckfarbe gemäß den Oberbegriffen der Ansprüche 21 und 22.

In jüngerer Zeit werden vermehrt UV-härtende organische Glasdruckfarben, die nach der Härtung mit Wärme nachbehandelt werden müssen, anstelle der früher verwendeten keramischen (anorganischen) Farben für das Bedrucken von Glas eingesetzt. Dies eröffnet die Möglichkeit, ohne Schwermetalle auszukommen, über eine größere Farbpalette (Standard- und Mischtöne) zu verfügen, eine größere Brillanz und einen erhöhten Glanzgrad zu erzielen. Ein weiterer Vorteil ist die Möglichkeit, den Farbton direkt nach der UV-Härtung zu beurteilen. Im Gegensatz dazu ist bei den anorganischen Farben die Beurteilung erst nach dem Einbrennen möglich. Weiter bieten sie Verfahrensvorteile, wie einen schnelleren Temperierungsprozess (z.B. ca. 20 min gegenüber 90 min Temperierung) und eine verririgerte Temperierungstemperatur (z.B. 160°C gegenüber 500-700°C, was die Verfahrenskosten gegenüber Verfahren mit anorganischen Glasdruckfarben verringert. Die organischen Glasdruckfarbe selbst sind allerdings teurer als herkömmliche anorganische Farben zum Bedrucken von Glas.

Die milderen Verfahrensbedingungen beim Druckverfahren mit organischen Glasdruckfarben sorgen dafür, dass die Innendruckbeständigkeit von Flaschen nicht beeinträchtigt wird. Für das Bedrucken von Glas, das mit hohen Temperaturen nachbehandelt werden muß, wie verformtes Glas für Automobile oder Glas mit Hochglanz-Goldbedruckung, sind die organischen Glasdruck-farben allerdings nicht geeignet.

Bei den derzeitig verfügbaren organischen Druckfarben für Glas können die mechanische Beständigkeit, die Deckkraft und die Wasserbeständigkeit Probleme bereiten, wobei es insbesondere schwierig sein kann, eine ausreichende Kratzfestigkeit zu erhalten.

Die organischen Druckfarben für Glas werden nach einer Glas-Vorbehandlung, z.B. durch Beflammung, in einem Zweikomponenten-Druckverfahren, d.h. mit einem in die Druckfarbe einzumischenden Haftvermittler, verdruckt und anschließend bei Temperaturen beispielsweise von 140°-200°C über einen bestimmten Zeitraum nachgetempert.

Es wäre wünschenswert, dieses Druckverfahren zu vereinfachen und damit Kosten einzusparen. Eine Möglichkeit der Vereinfachung wäre die Beseitigung des Erfordernisses, zweikomponentig zu drucken, d.h. einen Haftvermittler zu verwenden. Eine weitere bestünde darin, ein Nachtempern überflüssig zu machen.

Die WO 99/06336 offenbart ein Verfahren zum Bedrucken von Glas, in dem eine Glasfarbe, die ein Bisphenol A-Epoxidharz umfaßt, auf ein Glassubstrat gedruckt und dann mittels Strahlung gehärtet wird, wobei gegebenenfalls ein Haftvermittler verwendet wird.

Die Erfinderin hat jedoch gefunden, daß eine solche Glasdruckfarbe und ein solches Verfahren ohne weitere Maßnahmen keine ausreichende Kratzfestigkeit sowie ferner keine ausreichende Haftung der Glasfarbe an dem Glassubstrat und keine ausreichende Wasserbeständigkeit liefert. Demgemäß werden auch in allen Beispielen der WO 99/06336 sowohl ein Haftvermittler verwendet als auch ein Nachtempern bei einer Temperatur von 150°C bis 200°C vorgenommen. Die US 5 656 336 A offenbart ein ähnliches Verfahren, das auch an denselben Mängeln leidet.

Aus der US 2004/0068027 A1, ist eine UV-härtbare Pulverzusammensetzung bekannt, die Umsetzungsprodukte von Bisphenol A Epoxidharzen mit Acrylsäure enthält. Die bekannte Zusammensetzung enthält kein UVhärtbares Monomer.

Aus der WO 2005/040055 A1 ist eine Farbzusammensetzung bekannt, bei welcher Epoxidharz auf Bisphenol A in UV-härtbarem Monomer gelöst ist.

Die US 3,419,412 beschreibt eine Zusammensetzung, bei der Epoxidharz durch zugabe eines Curing-Agents vernetzt wird. Die Zusammensetzung enthält kein Monomer und keinen Photoinitiator, jedoch ein Wachs.

Die Aufgabe der Erfindung besteht darin, eine Glasdruckfarbe und einen Glasdrucklack anzugeben, die eine ausreichende Kratzfestigkeit sowie Haftung ohne Nachtempern gewährleisten. Ferner sollen eine Verwendung der Glasdruckfarbe und des Glasdrucklacks beim Bedrucken von Glassubstraten und ein dazugehöriges Druckverfahren angegeben werden.

Diese Aufgaben sind durch eine Glasdruckfarbe und einen Glasdrucklack gemäß Anspruch 1, durch eine Verwendung der Glasdruckfarbe und des Glasdrucklacks gemäß Anspruch 19 und durch ein Druckverfahren gemäß den Ansprüchen 21 und 22 gelöst.

Ein wichtiger Vorteil der Erfindung ist neben den mechanischen Eigenschaften der gehärteten Farbschicht bzw. Lackschicht, dass eine Verfahrensvereinfachung dadurch erhalten wird, dass sowohl bei Einkomponenten-Systemen als auch bei Zweikomponenten-Systemen die gewünschten mechanischen Eigenschaften ohne Nachtempern erreicht werden. Außerdem wird in den meisten Fällen eine gute Beständigkeit gegen Feuchtigkeit und Wasser erhalten.

Unter Glasdruckfarbe und Glasdrucklack werden eine Druckfarbe bzw. ein Drucklack verstanden, die sich zum Bedrucken von Glas und glasartigen Oberflächen, wie Keramik und Fliesen, eignen.

Die erfindungsgemäße Glasdruckfarbe und der erfindungsgemäße Glasdrucklack enthalten ein Wachs. Die Erfinderin hat erkannt, dass durch Einsatz eines Wachses die Kratzfestigkeit, also die mechanische Beständigkeit, der Glasdruckfarbe bzw. des Glasdrucklackes signifikant gegenüber bekannten Farben bzw. Lacken erhöht werden kann.

Geeignete Wachse sind im Handel erhältlich. Insbesondere in Frage kommen nachstehend aufgeführte Wachse, wobei beispielhaft zu den jeweiligen Wachsen im Handel erhältliche Produkte genannt sind; die jeweilige Bezugsquelle findet sich in Klammern angegeben:
Polyethylenwachse:
   *Ceraflour 990* (Byk-Cera ; Danzigweg 23 ; 7418 EN Deventer Netherlands)
   *Ceraflour 991* (Byk-Cera ; Danzigweg 23 ; 7418 EN Deventer Netherlands)
   *Printwax ME 0825* (DEUREX Micro-Technologies GmbH ; Dr. Bergius Strasse 18/20 - 06729 Tröglitz Germany)
Modifizierte Poyethylenwachse:
   *Ceraflour 961* (Byk-Cera ; Danzigweg 23 ; 7418 EN Deventer Netherlands)
   *Everglide UV 961* 25% (Krahn-Chemie GmbH ; Grimm 10 ; 20457 Hamburg Germany)
High Density Polyethylen-Wachse
   *Ceraflour 950* (Byk-Cera ; Danzigweg 23 ; 7418 EN Deventer Netherlands)
Polymer-Kieselsäure-Verbindungen
   *Deuteron MM 659* (Deuteron GmbH ; in den Ellern 2 ; 28832 Achim Germany)
Mikronisierte Polyolefin-Wachse
   *Micro Wax DM* (Finma-Chemie GmbH ; Theodor-Heuss-Straße 5 ; 61191 Rosbach Germany)
   *Micro Wax HTDM* (Finma-Chemie GmbH ; Theodor-Heuss-Straße 5 ; 61191 Rosbach Germany)
Fischer-Tropsch-Wachse
   *Ceraflour 940* (Byk-Cera ; Danzigweg 23 ; 7418 EN Deventer Netherlands )
Mikronisierte Polytetrafluoroethylen-Wachse
   *Ceraflour 980* (Byk-Cera ; Danzigweg 23 ; 7418 EN Deventer Netherlands)
   *Ultraglide UV 701* (Krahn-Chemie GmbH ; Grimm 10 ; 20457 Hamburg Germany)
   *Shamrock SST-3* (Shamrock ; Heesterveldweg 21 ; 3700 Tongeren Belgium)
Mikronisierte Polytetrafluoroethylen/Polyethylen-Wachse
   *Ceraflour 968* (Byk-Cera ; Danzigweg 23 ; 7418 EN Deventer Netherlands )
   *Ceraflour 996* (Byk-Cera ; Danzigweg 23 ; 7418 EN Deventer Netherlands )
Amid-Wachse
   *Ceraflour 994* (Byk-Cera ; Danzigweg 23 ; 7418 EN Deventer Netherlands )
   *Deurex MA 7020* ((DEUREX Micro-Technologies GmbH ; Dr. Bergius Strasse 18/20 06729 Tröglitz Germany)
Camaubawachse
   *Ceraflour 4RC 1165* (Byk-Cera ; Danzigweg 23 ; 7418 EN Deventer Netherlands )
   *Everglide UV 636* 25% (Krahn-Chemie GmbH ; Grimm 10 ; 20457 Hamburg Germany)
Montanwachse
   *Deurex MM 8120* ((DEUREX Micro-Technologies GmbH ; Dr. Bergius Strasse 18/20 06729 Tröglitz Germany)
   *Deurex MM 8200* (DEUREX Micro-Technologies GmbH ; Dr. Bergius Strasse 18/20 06729 Tröglitz Germany)
Mikronisiert Ester-Wachse mit UV-reaktiven Gruppen
   *Ceridust TP 5091* (Clariant GmbH; Am Unisyspark 1; 65843 Sulzbach Germany)
Paraffin-Wachse
   Polysperse HP (Eastman Chemical Deutschland GmbH ; Charlottenstraße 61; 51149 Köln Germany)
Polypropylen-Wachse
   *Crayvallack WN-1135* (Lubrizol Coating Additives GmbH; Max-Planck Straße 6; 27721 Ritterhude Germany )
Sprühmikronisierte Poyofefin-Wachse
   *Printwax MXF 9510 D* ((DEUREX Micro-Technologies GmbH ; Dr. Bergius Strasse 18/20 06729 Tröglitz Germany)
   *Printwax MX 9815* (DEUREX Micro-Technologies GmbH ; Dr. Bergius Strasse 18/20 06729 Tröglitz Germany)

Bevorzugt beträgt die Konzentration des Wachses 0,1 Gew.% bis 10 Gew.%, bevorzugter 0,5 Gew.% bis 5,0 Gew.% und besonders bevorzugt 1,0 Gew.% bis 3,0 Gew.% Trockengewicht, bezogen auf das Gewicht der Glasdruckfarbe bzw. des Glasdrucklackes.

Das Wachs wird vorzugsweise in der Glasdruckfarbe bzw. dem Glasdrucklack mittels Rührer, Dissolver, oder 3-Walzen- oder Perlmühle eindispergiert, ohne auf diese Verfahren beschränkt zu sein.

Die erfindungsgemäße Glasdruckfarbe und der erfindungsgemäße Glasdrucklack enthalten als Harzbestandteil ein Epoxidharz auf der Basis von Bisphenol A, das vorzugsweise ein Molekulargewicht im Bereich von 700 bis 1500 (Gewichtsmittel) aufweist. Derartige Epoxidharze sind im Handel erhältlich. Besonders bevorzugte Beispiele sind Rütapox-Harz 0194 von Bakelite AG; ARALDITE^{®} GT 7072 von Vantico AG, K-401.1.32, CH-4002 Basel und Epikote 1055 von Brenntag.

Das erfindungsgemäß verwendete Epoxidharz wird in einem Monomer gelöst, welches UV-härtend ist, z.B. auf Grund von zur Polymerisation geeigneten Acrylatgruppen. Bevorzugt handelt es sich bei diesem Monomer um Mono-, Di- oder höhere Polyacrylate oder -methacrylate, wie beispielsweise Isobornylacrylat, 2-Phenylethylacrylat, 2-(2-Ethoxyethoxy)ethylacrylat (EOEOEA), 1,6-Hexandioldiacrylat (HDDA), Dipropylenglycoldiacrylat (DPGDA), Neopentylglycoldiacrylat, Dipentaerythrithexaacrylat (DPHA), propoxyliertes Glycerintriacrylat (GPTA), Tripropylenglycoldiacrylat, (TPGDA), Dipentaerythritpentaacrylat (DiPEPA), Pentaerythrittriacrylat (PETIA), ethoxyliertes Trimethylpropantriacrylat (TMPEOTA), Dipentaerythritacrylat (DPHA), Tricyclodecandimethanoldiacrylat (TCDDMDA), Hydroxypropylmethacrylat (HPMA). Ganz besonders bevorzugt ist 1,6-Hexandioldiacrylat.

Bevorzugt beträgt die Konzentration des Epoxidharzes in dem Monomer 10 bis 90 Gew.%, bevorzugt 30 bis 70 Gew.%, ganz besonders bevorzugt 50 Gew.%, bezogen auf die Mischung.

Die Konzentration des Epoxids in der erfindungsgemäßen Glasdruckfarbe und dem erfindungsgemäßen Glasdrucklack liegt im allgemeinen bei 1 bis 90 Gew.% Trockengewicht, bezogen auf die Gesamtmasse der Glasdruckfarbe oder des Glasdrucklacks, bevorzugt liegt sie bei 5 bis 20 Gew.%, besonders bevorzugt liegt sie bei 11 bis 14 Gew.% Trockengewicht.

Optional enthalten die erfindungsgemäße Glasdruckfarbe und der erfindungsgemäße Glasdrucklack ein Harz mit funktionellen Gruppen, das freie funktionelle Amino-, Hydroxy-, Epoxid-, Säure-, Säureanhydrid- und/oder Acrylatgruppen aufweist. Als besonders geeignet haben sich Melaminacrylatharze (z.B. das Siliciumdioxid-verstärkte NANOCRYL XP 21/0793 von Hanse Chemie (hanse chemie GmbH, Charlottenburgerstrasse 9, D-21502 Geesthacht, Deutschland))oder das multifunktionelle Melaminacrylat ACTILANE 890 von Akzo Nobel Resins (Akzo Nobel Resins bv, Verkaufsbüro Deutschland, Industriestrasse 8, P.O. Box 100265, D-46422 Emmerich); Viaktin VTE 5967 von Cytec Surface Specialities, Anderlechtstr. 33, B-1620 Drogenbos, und ein säuremodifiziertes Polyesteracrylat (z.B. GENOMER* 7154 der Firma Rahn, Dörflistrasse 120, Zürich, Schweiz; Ebecryl 770 von Cytec Surface Specialities) erwiesen. Weitere geeignete Harze zur Kombination sind gewisse Polyesterharze (z.B.Roskydal UA XP 2416 von Bayer, Ebecryl 524 von Cytec Surface Specialities) und Epoxyacrylate (z.B. Inchemrez UV 93IB50 von In Chem Corp, P.O.Box 69, CH 1170 Aubonne).

Die Menge dieses Harzes mit funktionellen Gruppen in der Glasdruckfarbe oder dem Glasdrucklack kann in großem Maß variieren. Im allgemeinen liegt die Menge bei 5 bis 90 Gew.% Trockengewicht, bezogen auf die Gesamtmasse der Glasdruckfarbe oder des Glasdrucklacks, bevorzugt bei 5 bis 40 Gew.%, besonders bevorzugt bei 10 bis 30 Gew.%. Das Harz mit funktionellen Gruppen dient dazu, die Glasdruckfarbe oder den Glasdrucklack geschmeidiger und weniger spröde zu machen und dessen Haftung und Kratzfestigkeit zu erhöhen.

Die erfindungsgemäße Glasdruckfarbe und der erfindungsgemäße Glasdrucklack können darüber hinaus gegebenenfalls noch zusätzliche Harze zur weiteren Verbesserung ihrer bzw. seiner Eigenschaften enthalten. Diese Harze können aus einer großen Vielfalt von Harzen ausgewählt sein, beispielsweise Methylmethacrylat-Colpolymeren (z.B. Paraloid B-48N, Paraloid B60, Paraloid B-82 von Rohm & Haas Deutschland GmbH, In der Kron 4, D-60439 Frankfurt; Neocryl B-810 von Neoresins, Lurgiallee, D-60439 Frankfurt /Main); Ethylmethacrylat (z.B. Paraloid B 72 von Rohm & Haas); Butylmethacrylat-Copolymeren (z.B. Degalan LP 65/12, Degalan LP 68/04 von Röhm GmbH & Co. KG, Kirschenallee, D-64293 Darmstadt); flüssigen Epoxidharzen (z.B. Polypox E 064 von UPPC GmbH, Rütapox-Harz 0164 von Bakelite AG, Araldite GY 250 von Vantico); ungesättigten Polyesterharzen (z.B. Haftharz LTH von Degussa Chemiepark Marl, Paul-Baumann-Str. 1, D-45764 Marl); gesättigten Polyesterharzen (Dynapol L 912, Dynapol L 952 von Degussa)

Derartige zusätzliche Harze können beispielsweise in einer Menge von 1 bis 50 Gew.% Trockengewicht, bezogen auf die Gesamtmasse der Glasdruckfarbe oder des Glasdrucklacks, bevorzugt von 3 bis 10 Gew.% vorliegen.

Die erfindungsgemäße Glasfarbe und der erfindungsgemäße Glasdrucklack enthalten mindestens einen Photoinitiator, gewöhnlich zwei und möglicherweise drei oder mehr Photoinitiatoren, um die Oberflächen- und Tiefenhärtung (Vernetzung) der Glasfarbe im UV-Licht einzuleiten. Sie können aus den üblichen in UV-härtenden Druckfarben und -lacken usw. verwendeten Photoinitiatoren ausgewählt werden, beispielsweise, ohne darauf beschränkt zu sein, 1-Hydroxycyclohexylacetophenon (Irgacure^{®} 184 von Ciba SPEZIALTÄTEN-CHEMIE AG; Klybeckstraße 141, Postfach, CH-4002 Basel), 2-Methyl-1-[4-(methylthiophenyl)-2-morpholinopropan]-1-on (Irgacure^{®} 907 von Ciba), 2-Benzyl-2-dimethylamino-1-(4-morpholinophenyl)butan-1-on (Irgacure^{®} 369 von Ciba), Bis(2,4,6-trimethylbenzoyl)phenylphosphinoxid (Irgacure^{®} 819 von Ciba), 2-Hydroxy-2-methyl-1-phenyl-1-propanon (Darocur^{®} 1173 von Ciba), Isopropylthioxanthon (ITX von Lambson), 2-Chlorthioxanthon (CTX von Lambson), Benzophenon, 2,4,6-Trimethylbenzoldiphenylphosphinoxid (TPO von BASF), Ethyl-2,4,6-trimethylbenzoylphenylphosphinat (TPO-L von BASF) und Methylbenzoylformiat (MBF von Lambson). Die Gesamtmenge an Photoinitiatoren beträgt im allgemeinen 1 bis 12 Gew.%, bevorzugt 3 bis 7 Gew.%, bezogen auf die Gesamtmasse der Glasdruckfarbe oder des Glasdrucklacks.

Zusätzlich können auch Co-Initiatoren wie Amine (z.B. MDEA von BASF, BASF Aktiengesellschaft, Carl-Bosch-Strsaße 38, D-67056 Ludwigshafen) oder aminmodifizierte Acrylate (z.B. Ebecryl P 115, Ebecryl 7100 von Cytec Surface Specialitites; Actilane 705, Actilane 715, Actilane 755 von Akzo Nobel Resins bv., Verkaufsbüro Deutschland, Industriestraße 8, D-46446 Emmerich; Laromer PO 94 F, Laromer LR 8869 von BASF; Craynor 503, Craynor 550 von Sartomer, Immeuble le Diamant B, F-92970 Paris la Defense; Photomer 4775F von Cognis) in Mengen von 1 bis 5 Gew.%, bezogen auf die Gesamtmasse der Glasdruckfarbe oder des Glasdrucklacks, enthalten sein.

In der erfindungsgemäßen Glasdruckfarbe können Pigmente enthalten sein. Bei diesen kann es sich um beliebige Pigmente handeln, z.B. um Titandioxid, Zinksulfid, Pigmentruß, Azodiarylgelb, Isoindolgelb, Diarylidorange, Chinacridonmagenta, Diketopyrrolorot, Kupferphthalocyaninblau, Kupferphthalocyaningrün, Dioxazinviolett und Diketometalloxid. Eine ziemlich umfassende Auflistung weiterer einsetzbarer Pigmente ist im Colour Index International, Fourth Edition Online, 2001, veröffentlicht von der Society of Dyers and Colourists in Verbindung mit der American Association of Textile Chemists and Colorists, zu finden. Es können auch Effektpigmente, wie Metalloxid-beschichtete Glimmer und Metallicpigmente, eingesetzt werden.

Die Menge an Buntpigment beträgt gewöhnlich 2 bis 50 Gew.%, bevorzugt 10 bis 35 Gew.%, bezogen auf die Gesamtmasse der Glasdruckfarbe, abhängig von der Art des Pigments und der gewünschten Deckkraft. Weißpigment wird gewöhnlich in einer Menge von 20 bis 50 Gew.%, bevorzugt 30 bis 40 Gew.%, eingesetzt.

Der Glasdrucklack enthält im allgemeinen kein Pigment.

Im allgemeinen wird der Glasdruckfarbe oder dem Glasdrucklack zusätzlich zu dem UV-härtenden Monomer, in dem das Epoxidharz auf der Basis von Bisphenol A gelöst ist, weiterer Reaktivverdünner zugesetzt. Bei diesen Reaktivverdünnern, die ebenfalls UV-härtend sind, kann es sich um die oben im Zusammenhang mit der Polyesterlösung erörterten UV-härtenden Monomere handeln. Ferner können auch noch weitere Verbindungen mit einer einzigen ethylenisch ungesättigten Bindung verwendet werden, wie beispielsweise N-Vinylpyrrolidon (NVP) und Vinylcaprolactam. Die eingesetzten Mengen an zusätzlichem Reaktivverdünner betragen im allgemeinen 0 bis 60 Gew.%, bevorzugt 3 bis 20 Gew.%, insbesondere 4 bis 8 Gew.%, z.B. 6 bis 7 Gew.%, bezogen auf die Gesamtmasse der Glasdruckfarbe oder des Glasdrucklacks.

Die erfindungsgemäße Glasdruckfarbe und der erfindungsgemäße Glasdrucklack können einen oder mehrere Füllstoffe umfassen. Die Beschaffenheit der Füllstoffe ist nicht besonders kritisch. Sie können aus üblichen in Druckfarben verwendeten Füllstoffen ausgewählt sein, wie beispielsweise, ohne darauf beschränkt zu sein, China Clay, Bariumsulfat (in gefällter Form als blanc fixe), Calciumcarbonat, Zinksulfid, Kieselerde, Talkum, Aluminiumsilicat, Aluminiumhydrat und/oder Kieselsäure. Die Menge an eingesetztem Füllstoff liegt im allgemeinen im Bereich von 0 bis 50 Gew.%, bevorzugt 10 bis 30 Gew.%, z.B. 20 Gew.%, bezogen auf die Gesamtmasse der Glasdruckfarbe oder des Glasdrucklacks.

Auch ein Verdicker kann in der erfindungsgemäßen Glasdruckfarbe oder dem erfindungsgemäßen Glasdrucklack enthalten und ebenfalls aus üblichen für diesen Zweck in Farben/Lacken verwendeten Materialien ausgewählt sein. Dazu zählen ohne Beschränkung darauf z.B. pyrogene Kieselsäure, Schichtsilicate und Rizinusölderivate. Die eingesetzte Menge an Verdicker liegt gewöhnlich im Bereich von 0 bis 10 Gew.%, bevorzugt 1 bis 5 Gew.% und insbesondere 1,5 bis 3 Gew.%, bezogen auf die Gesamtmasse der Glasdruckfarbe, in Abhängigkeit von der Art des Pigments, oder des Glasdrucklacks.

Im allgemeinen enthalten die erfindungsgemäße Glasdruckfarbe und der erfindungsgemäße Glasdrucklack auch einen Entschäumer und/oder ein Verlaufmittel, im allgemeinen in einer Menge von 0,5 bis 2,5 Gew.%, bevorzugt 0,5 bis 1,5 und insbesondere 1 Gew.%, bezogen auf die Gesamtmasse der Glasdruckfarbe oder des Glasdrucklacks. Entschäumer können z.B. aus modifizierten Acrylaten oder modifizierten Acrylatcopolymeren, aber auch, und das bevorzugt, aus silikonhaltigen Verbindungen ausgewählt sein. Verlaufmittel umfassen beispielsweise modifizierte Polyacrylate und Polysiloxane.

Als Stabilisatoren werden bevorzugt Genorad 16 von der Fa. Rahn und Fluorstab UV2 von der Fa. Kromachem, Park Industrial Centre, Tolpits Lane, Watford, Hertfordshire WD1 8SP, UK, verwendet.

Der Glasdruckfarbe und dem Glasdrucklack kann vor dem Verdrucken ein Haftvermittler in einer Menge von 0,1 bis 20 Gew.%, bevorzugt 1 bis 10 Gew.%, bezogen auf die Gesamtmasse der Glasdruckfarbe oder des Glasdrucklacks, zugesetzt werden. Dabei kann es sich um Isocyanat-Haftvermittler handeln, z.B. um aliphatische Polyisocyanate, wie Hexamethylendiisocyanat (HDI), Trimethylhexandiisocyanat (TMHDI), cycloaliphatische Polyisocyanate wie Isophorondiisocyanat (IPDI), hydriertes Xylylendiisocyanat (HXDI) oder Diisocyanatodicyclohexylmethan (HMDI), sowie aromatische Polyiisocyanate, wie Toluylendiisocyanat (TDI), Xylylendiisocyanat (XDI), Tetramethylxylylendiisocyanat (TMXDI) oder Diisocyanatodiphenylmethan (MDI). Kommerziell erhältliche Produkte sind z.B. Desmodur E41 oder Desmodur N 75 (Bayer). Auch Polyimide, wie Polyethylenimide, Polycarbodiimide, können eingesetzt werden. Die bevorzugten Haftvermittler sind jedoch Silan-Haftvermittler, wie Alkylsilane, Vinylsilane, Methacryloxysilane, Epoxysilane, Aminosilane, Harnstoffsilane, Chlorsilane und Isocyanatosilane. Ganz besonders bevorzugt sind Aminosilane, wie *gamma-*Aminopropyltriethoxysilan, *gamma-*Aminopropyltrimethoxysilan, n-*beta*-(Aminoethyl)-*gamma-*aminopropyltrimethoxysilan, *Bis*(*gamma-*Trimethoxysilylpropyl) amin, N-Phenyl-*gamma*-Aminopropyltrimethoxysilan und N-*beta-*(Aminoethyl)-*gamma*-aminopropylmethyldimethoxysilan, und Isocyanatosilane, wie *gamma*-Isocyanatopropyltriethoxysilan.

Die Gegenstände, die gemäß der Erfindung bedruckt werden können, schließen Glas, Keramik, Fliesen und ähnliche zumindest an der Oberfläche glasartige Gegenstände ein. Demgemäß betrifft die Erfindung auch die Verwendung einer Glasdruckfarbe oder eines Glasdrucklacks zum Bedrucken von Glas-, Keramik-, Fliesen- und ähnlichen zumindest an ihrer Oberfläche glasartigen Substraten.

Derartige Gegenstände können in jeder Form oder Gestalt vorliegen, wie einem Behälter, einer Platte, einer Fliese, einer Figur usw.. In einer bevorzugten Ausführungsform der Erfindung ist der Gegenstand ein Verpackungs- (Getränkeflaschen, Kosmetikbehälter) oder ein Wirtschaftsglas.

Der Ausdruck "Glas", wie er gemäß der Erfindung verwendet wird, soll Glas, Keramik, Fliese und ähnlich glasartige Materialien bedeuten.

Vor dem Bedrucken wird das Glas gewöhnlich einer Vorbehandlung unterzogen. Dabei kann es sich um eine Flammenbehandlung handeln. Bei einem geeigneten Glas kann auch auf eine Vorbehandlung verzichtet werden.

Eine besonders wirkungsvolle Vorbehandlung ist das sogenannte UVitro-Verfahren der Firma Isimat, Ringelbacherstrasse 38-40, D-73479 Ellwangen. Dieses Verfahren ist in der DE 100 19 926 A1 und in der US 6,513,435 B2 ausführlich erläutert. Es umfaßt in einem ersten Schritt die Behandlung einer Glasoberfläche mit einer oxidierenden Flamme (d.h. mit Sauerstoffüberschuß) gewöhnlich über 3 bis 4 Sekunden und in einem zweiten Schritt die Behandlung mit einer silicatisierenden Flamme (d.h. einer Flamme, der eine Siliciumverbindung, z.B. Tetramethoxysilan, zugeführt wird), gewöhnlich ebenfalls über 3 bis 4 Sekunden.

Anschließend wird das Glas bedruckt. Bei dem Druckverfahren kann es sich beispielsweise um ein Siebdruck-, Tampondruck-, Offsetdruck-, Flexo- oder Tiefdruckverfahren handeln. Bevorzugt ist ein Siebdruckverfahren.

Die Härtung der Glasdruckfarbe oder des Glasdrucklacks wird mit UV-Licht in einem Wellenlängenbereich von 200 bis 400 nm über eine Zeitspanne vorgenommen, die ausreichend ist, um eine vollständige Härtung zu erzielen. Alternativ kann die Glasdruckfarbe oder der Glasdrucklack auch ohne Photoinitiatoren mit Elektronenstrahlen gehärtet werden.

Es kann die ganze Farbtonpalette verdruckt werden. Wenn mit Siebdruck gedruckt wird, wird vorzugsweise ein Siebdruckgewebe 100-40 bis 180-27, bevorzugt 140-34 verwendet, was eine Farbschichtdicke von 5-10 µm zum Ergebnis hat. Die Härtung erfolgt je nach Druckaufgabe und Druckmaschine mit marktüblichen Quecksilber-Mitteldrucklampen, alternativ Gallium dotierten bzw. Eisen dotierten Lampen mit 80-400 W/cm, bevorzugt 120 bis 200 W/cm, die im wesentlichen fokussiert sind. Die Belichtungszeit ist mit der Druckgeschwindigkeit gekoppelt, da die Druck- und die Belichtungsvorrichtung gekoppelt sind. Bei Flaschen ist eine übliche Druckgeschwindigkeit 40-120 Drucke/min.

Nach der UV-Härtung kann gegebenenfalls ein Nachtemperungsschritt z.B. bei einer Temperatur von 130 bis 200°C, bevorzugt 130 bis 170°C und insbesondere 160°C über eine Zeitspanne von beispielsweise 20 bis 40 min, bevorzugt 20 min, vorgenommen werden.

Die Glasdruckfarbe und der Glasdrucklack haben eine gute Zwischenschichthaftung und können mit Heißprägefolien geprägt werden.

Die folgenden Beispiele erläutern die Erfindung.

### BEISPIELE

### Beispiel 1

Bei einer Glasflasche wurde eine UVitro-Vorbehandlung vorgenommen (Flammbehandlungsanlage arcogas FTS 401 (Arcogas GmbH, Rotweg 25, D-71297 Mannheim)):

| | |
|---|---|
| Brenner: MB3 100 | |
| 1. | Vorbeflammen 300 1/min. (Luft) - 11 1/min. (Propan/Butan) |
| 2. | UVitro 200 1/min. (Luft) - 7,51/min. (Propan/Butan) |
| Dauer: jeweils 3 - 4 Sekunden | |

Danach werden die Flaschen auf 35° - 40°C abgekühlt.

Mittels Dispergierung auf 3-Walzen- bzw. Perlmühle wurde vorher eine Glasdruckfarbe der folgenden Zusammensetzung hergestellt:

| Komponente | Bezugsquelle | Menge (Gew.%) |
|---|---|---|
| 1,6-Hexandioldiacrylat | LAROMER* HDDA | 6,6 |
| Polysiloxanentschäumer | Tego Airex 920*** | 0,5 |
| | Tego Rad 2500**** | 0,5 |
| Photoinitiator 1 | DAROCURE 1173/1173C | 1 |
| Photoinitiator 2 | Lucirin TPO | 4,9 |
| Co-Initiator | EBECRYL 7100***** | 4 |
| Pigment | TiO₂ | 27,5 |
| Mikronisiertes Polytetrafluoroethylen-Wachs | Lanco TF 1778****** | 3 |
| 50%ige Lösung von Epoxidharz auf Bisphenol A-Basis in Laromer HDDA | ARALDITE 7072 50%ig in Laromer HDDA | 52 |
| | | 100 |

| | | |
|---|---|---|
| * Laromer ist eine Marke der Firma BASF *** Tego Airex 920 ist ein Entschäumer der Firma Tego Chemie Service GmbH, Goldschmidtstraße 11. D-45127 Essen **** Tego Rad 2500 ist ein Verlaufmittel der Firma Tego ***** Ebecryl 7100 ist ein Amino-modifiziertes Acrylat der Firma Surface Specialitites UCB ****** Lanco TF 1778 ist ein PTFE-Wachs der Firma Noveon | | |

Eine Mischung aus den in der vorstehenden Tabelle angegebenen Komponenten wurde mit 4 Gew.% Diaminosilan (z.B. N-beta-(Aminoethyl)-*gamma*-aminopropyltrimethoxysilan) oder N-beta-(Aminoethyl)-*gamma*-aminopropylmethyldimethoxysilan) oder mit 10 Gew.% *gamma*-Isocyanatopropyltriethoxysilan gemischt und im Siebdruckverfahren auf einer ISIMAT 1000 P-Druckmaschine mit einem Siebgewebe 120-34 bei 60 Drucken/min auf die behandelte Glasflasche gedruckt.

Die Verdruckbarkeit ist gut.

Die UV-Härtung fand in einem UV-Trockner bei 600 mJ/cm³ (gemessen mit dem UV MAP der Fa. EIT, Inc., 108 Carpenter Drive, Sterling, VA 20164) statt.

Ein Einbrennen der Farbe wurde nicht vorgenommen.

Es wurde eine sehr gute Kratzfestigkeit und Haftfestigkeit im unverletzten Farbfilm erzielt. Die Kratzfestigkeit wurde mit einem Erichsen Härteprüfstab, Modell 318, ermittelt. Es wurde ein Wert von mindestens 5N und in den meisten Fällen ein Wert von mindestens 7N bestimmt.

### Beispiel 2

| Komponente | Bezugsquelle | Menge (Gew. %) |
|---|---|---|
| 1,6-Hexandioldiacrylat | LAROMER* HDDA | 6 |
| Stabilisator | FLORSTAB UV-2** | 1 |
| Polysiloxanentschäumer | Tego Airex 920*** | 0,5 |
| | Tego Rad 2500**** | 0,5 |
| Photoinitiator 1 | DAROCURE 1173/1173C | 1 |
| Photoinitiator 2 | Lucirin TPO | 4,9 |
| Co-initiator | EBECRYL 7100***** | 4 |
| Pigment | TiO₂ | 27,5 |
| Mikronisiertes Polytetrafluoroethylen-Wachs | Lanco TF 1778****** | 3,1 |
| 50%ige Lösung von Epoxidharz auf Bisphenol A-Basis in HDDA | ARALDITE 7072 50%ig in Laromer HDDA | 23 |
| Nanosiliciumdioxid in Melaminacrylat | NANOCRYL XP 21/0793 | 10 |
| 35%ige MMA-Colpolymerlösung in Laromer HDDA | PARALOID B60 35%ig in HDDA | 18,5 |
| | | 100 |

| | | |
|---|---|---|
| (Fußnoten *, ***, ****, ***** und ****** siehe Beispiel 1) **: FLORSTAB UV-2 ist ein Stabilisator der Firma Kromachem | | |

Eine Mischung aus den in der vorstehenden Tabelle angegebenen Komponenten wurde mit 4 Gew.% Diaminosilan (z.B. N-*beta-*(Aminoethyl)-*gamma*-aminopropyltrimethoxysilan oder N-*beta-*(Aminoethyl)-*gamma*-aminopropylmethyldimethoxysilan) oder mit 10 Gew.% *gamma*-Isocyanatopropyltriethoxysilan gemischt und im Siebdruckverfahren auf einer ISIMAT 1000 P-Druckmaschine mit einem Siebgewebe 120 - 34 bei 60 Drucken/min auf die behandelte Glasflasche gedruckt.

Die Verdruckbarkeit ist gut.

Die UV-Härtung fand in einem UV-Trockner bei ca. 600 mJ/cm² (siehe Beispiel 1) statt.

Ein Einbrennen der Farbe wurde nicht vorgenommen.

Es wurde eine sehr gute Kratzfestigkeit und Haftfestigkeit im unverletzten Farbfilm erzielt. Die Kratzfestigkeit wurde mit einem Erichsen Härteprüfstab, Modell 318, ermittelt. Es wurde ein Wert von mindestens 5N und in den meisten Fällen ein Wert von mindestens 7N bestimmt.

Im Spülmaschinentest konnten in einer Winterhalter-Industriespülmaschine über 1000 Spülvorgänge und in einer Miele Haushaltsspülmaschine über 150 Spülvorgänge ohne Veränderung des Druckbildes vorgenommen werden.

Die bedruckten Flaschen konnten ohne Verletzung des Farbfilms in einer Abfüllinie mit Fruchtsaft befüllt werden.

### Beispiel 3 (Referenz)

Auf unbehandeltes Flachglas wird eine Glasfarbe mit der folgenden Zusammensetzung

| Komponente | Handelsname | Menge (Gew.%) |
|---|---|---|
| 1,6-Hexandioldiacrylat | LAROMER* HDDA | 2 |
| Stabilisator | FLORSTAB UV-2** | 1 |
| Polysiloxanentschäumer | Tego Airex 920*** | 0,5 |
| | Tego Rad 2500**** | 0,5 |
| Photoinitiator 1 | DAROCURE 1173/1173C | 1 |
| Photoinitiator 2 | Lucirin TPO | 4 |
| Co-Initiator | EBECRYL 7100***** | 2,5 |
| Pigment | TiO₂ | 27,5 |
| Mikronisiertes Polytetrafluoroethylen-Wachs | Lanco TF 1778****** | 3,1 |
| Säuremodifiziertes Polyesteracrylat | GENOMER 7154 | 57,9 |
| | | 100 |

| | | |
|---|---|---|
| (Fußnoten siehe Beispiele 1 und 2) | | |

ohne Verwendung eines Haftvermittlers im Siebdruckverfahren mit einem Siebgewebe 140-34 gedruckt.

Die UV-Härtung wurde mit einer Quecksilbermitteldrucklampe bei 2x120 W/cm² bei etwa 5 m/min vorgenommen.

Es wurde ohne Einbrennen eine gute Gitterschnittfestigkeit (Haftung) erzielt. Die Kratzfestigkeit ist sowohl im unverletzten als auch im verletzten Film sehr gut und wurde mit einem Erichsen Härteprüfstab, Model 318, zu mindestens 5N ermittelt.

### Beispiel 4

Auf unbehandeltem Flachglas wird eine Glasfarbe mit der folgenden Zusammensetzung

| Komponente | Handelsname | Menge (Gew.%) |
|---|---|---|
| 1,6-Hexandioldiacrylat | LAROMER* HDDA | 6,6 |
| Polysiloxanentschäumer | Tego Airex 920*** | 0,5 |
| | Tego Rad 2500**** | 0,5 |
| Photoinitiator 1 | DAROCURE 1173/1173C | 1 |
| Photoinitiator 2 | Lucirin TPO | 4,9 |
| Co-Initiator | EBECRYL 7100***** | 4 |
| Pigment | TiO₂ | 27,5 |
| Mikronisiertes Polytetrafluoroethylen-Wachs | Lanco TF 1778****** | 3 |
| 50%ige Lösung von Epoxidharz auf Bisphenol A-Basis in Laromer HDDA | ARALDITE 7072 50%ig in LAROMER HDDA | 23,5 |
| Säuremodifiziertes Polyesteracrylat | GENOMER 7154 | 28,5 |
| | | 100 |

| | | |
|---|---|---|
| (Fußnoten siehe Beispiele 1 und 2) | | |

ohne Verwendung eines Haftvermittlers im Siebdruckverfahren mit einem Siebgewebe 140-34 gedruckt.

Die UV-Härtung wurde mit einer Quecksilbermitteldrucklampe bei 2x120 W/cm² bei etwa 5 m/min vorgenommen.

Es wurde ohne Einbrennen eine gute Gitterschnittfestigkeit (Haftung) erzielt. Die Kratzfestigkeit ist sowohl im unverletzten als auch im verletzten Film sehr gut und wurde mit einem Erichsen Härteprüfstab, Model 318, zu mindestens 5 N ermittelt.

In einem weiteren Versuch wurde die Farbe anschließend 20 min bei 160°C eingebrannt.

Dann erreichte die Druckfarbe für Glas sofort nach dem Schwitzwassertest einen Wert für den Gitterschnitt nach EN ISO 2409 von GT 0.

Mit der Glasdruckfarbe der Beispiele 1 und 2 wurden also im Zweikomponentendruck ohne das Erfordernis eines Einbrennens gute bis sehr gute Kratzbeständigkeit und Haftung sowie Wasserbeständigkeitseigenschaften des resultierenden Farbfilms erzielt. Mit den Glasdruckfarben der Beispiele 3 und 4 konnten im Einkomponentendruck ohne anschließendes Einbrennen ebenfalls gute Kratzfestigkeits- und Haftungseigenschaften und mit anschließendem Einbrennen bei der Glasdruckfarbe des Beispiels 4 zusätzlich gute Wasserbeständigkeitseigenschaften des resultierenden Farbfilms verwirklicht werden. Dies bedeutet eine Vereinfachung des Druckverfahrens im Vergleich zu den Druckverfahren des Standes der Technik.

## Patentansprüche

1. Glasdruckfarbe oder Glasdrucklack, umfassend mindestens ein Harz, mindestens einen Photoinitiator sowie mindestens eine weitere Substanz, wobei es sich bei dem Harz um ein Epoxidharz auf der Basis von Bisphenol A, verdünnt in einem UV-härtenden Monomer handelt, **dadurch gekennzeichnet, dass** es sich bei der mindestens einen weiteren Substanz um ein Wachs handelt.

2. Glasdruckfarbe oder Glasdrucklack nach Anspruch 1, **dadurch gekennzeichnet, dass** zusätzlich zu dem Epoxidharz auf der Basis von Bisphenol A ein Harz mit funktionellen Gruppen, das freie funktionelle Amino-, Hydroxy-, Epoxid-, Säure-, Säureanhydrid- und/oder Acrylatgruppen enthalten ist.

3. Glasdruckfarbe oder Glasdrucklack nach Anspruch 1 oder 2, **dadurch gekennzeichnet, dass** das Wachs wenigstens eines aus der nachstehenden Gruppe ist:
Polyethylen-Wachs, modifiziertes Polyethylen-Wachs, High Density Polyethylen-Wachs, Polymer-Kieselsäure-Verbindung, mikronisiertes Polyolefin-Wachs, Fischer-Tropsch-Wachs, mikronisiertes polytetrafluoroethylen-Wachs, mikronisiertes Polytetrafluoroethylen/Polyethylen-Wachs, Amid-Wachs, Garnaubawachs, Montanwachs, mikronisiertes Ester-Wachs mit UV-reaktiven Gruppen, Paraffin-Wachs, Polypropylen-Wachs, sprühmikronisiertes Polyolefin-Wachs.

4. Glasdruckfarbe oder Glasdrucklack nach einem der Ansprüche 1 bis 3, **dadurch gekennzeichnet, dass** das Wachs in einer Menge von 0,1 Gew.% bis 10,0 Gew.% Trockengewicht, bezogen auf das Gewicht der Glasdrucktarbe oder des Glasdrucklackes, verwendet wird.

5. Glasdruckfarbe oder Glasdrucklack nach Anspruch 4,
**dadurch gekennzeichnet, dass** das Wachs in einer Menge von 0,5 Gew.% bis 5,0 Gew.% Trockengewicht, bezogen auf das Gewicht der Glasdruckfarbe oder des Glasdrucklackes, verwendet wird.

6. Glasdruckfarbe oder Glasdrucklack nach Anspruch 5,
**dadurch gekennzeichnet, dass** das Wachs in einer Menge von 1,0 Gew.% bis 3,0 Gew.% Trockengewicht, bezogen auf das Gewicht der Glasdruckfarbe oder des Glasdrucklackes, verwendet wird.

7. Glasdruckfarbe oder Glasdrucklack nach einem der Ansprüche 1 bis 6, **dadurch gekennzeichnet, dass** das Wachs in der Glasdruckfarbe bzw. dem Glasdrucklack dispergiert ist.

8. Glasdruckfarbe oder Glasdrucklack nach einem der Ansprüche 1 bis 6, **dadurch gekennzeichnet, dass** das Wachs in die Glasdruckfarbe bzw. den Glasdrucklack eingewalzt ist.

9. Glasdruckfarbe oder Glasdrucklack nach einem der Ansprüche 1 bis 8, **dadurch gekennzeichnet, dass** das Epoxidharz auf der Basis von Bisphenol A ein Gewichtsmittel des Molekulargewichts, im Bereich von 700 bis 1500 aufweist.

10. Glasdruckfarbe oder Glasdrucklack nach einem der Ansprüche 1 bis 9, **dadurch gekennzeichnet, dass** es sich bei dem Harz mit funktionellen Gruppen um ein Melaminacrylat, ein säuremodifiziertes Polyesteracrylat und/oder ein Epoxyacrylat handelt.

11. Glasdruckfarbe oder Glasdrucklack nach einem der Ansprüche 1 bis 10, **dadurch gekennzeichnet, dass** das Epoxidharz in einer Menge von 1 bis 90 Gew.%, bevorzugt 5 bis 20 Gew.% und insbesondere 11 bis 14 Gew.% Trockengewicht, bezogen auf das Gewicht der Glasdruckfarbe oder des Glasdrucklacks, verwendet wird.

12. Glasdruckfarbe oder Glasdrucklack nach einem der Ansprüche 1 bis 11, **dadurch gekennzeichnet, dass** das Harz mit funktionellen Gruppen in einer Menge von 5 bis 90 Gew.%, bevorzugt 5 bis 40 Gew.% und insbesondere 10 bis 30 Gew.% Trockengewicht, bezogen auf das Gewicht der Glasdruckfarbe oder des Glasdrucklacks, verwendet wird.

13. Glasdruckfarbe oder Glasdrucklack nach einem der Ansprüche 1 bis 12, **dadurch gekennzeichnet, dass** der oder die Photoinitiatoren in einer Gesamtmenge von 1 bis 12 Gew.%, insbesondere 3 bis 7 Gew.%, bezogen auf das Gewicht der Glasdruckfarbe oder des Glasdrucklacks, vorliegen.

14. Glasdruckfarbe oder Glasdrucklack nach einem der Ansprüche 1 bis 13 **dadurch gekennzeichnet, dass** das UV-härtende Monomer Hexandioldiacrylat ist.

15. Glasdruckfarbe oder Glasdrucklack nach einem der Ansprüche 1 bis 14, **dadurch gekennzeichnet, dass** sie bzw. er weiter einen von dem UV-härtenden Monomer verschiedenen UV-härtenden Reaktivverdünner enthält.

16. Glasdruckfarbe oder Glasdrucklack nach einem der Ansprüche 1 bis 15, **dadurch gekennzeichnet, dass** sie bzw. er weiter einen Stabilisator enthält.

17. Glasdruckfarbe oder Glasdrucklack nach einem der Ansprüche 1 bis 16, **dadurch gekennzeichnet, dass** sie bzw. er weiter einen Co-Initiator enthält.

18. Glasdruckfarbe nach einem der Ansprüche 1 bis 17,
**dadurch gekennzeichnet, dass** sie ein oder mehrere Pigmente oder Farbstoffe in einer Menge von 0,5 bis 50 Gew.%, bezogen auf das Gesamtgewicht der Farbe, enthält.

19. Verwendung einer Glasdruckfarbe oder eines Glasdrucklacks nach einem der Ansprüche 1 bis 18 zum Bedrucken eines Glas- oder zumindest an seiner Oberfläche glasartigen Substrats.

20. Verwendung nach Anspruch 19, **dadurch gekennzeichnet, dass** das Glas- oder glasartige Substrat aus Glas, Keramik und Fliesen ausgewählt ist.

21. Verfahren zum Bedrucken eines Glas- oder zumindest an seiner Oberfläche glasartigen Substrats mit einer Glasdruckfarbe oder einem Glasdrucklack nach einem der Ansprüche 1 bis 18, umfassend die Schritte:
a) gegebenenfalls Vorbehandeln des Glas- oder glasartigen Substrats;
b) Bedrucken des Glas- oder glasartigen Substrats mit einer Glasdruckfarbe oder einem Glasdrucklack nach einem der Anspruche 1 bis 18, wobei vor dem Verdrucken ein Haftvermittler in die Glasdruckfarbe oder den Glasdrucklack eingemischt wird, und
c) Härten der Glasdruckfarbe oder des Glasdrucklacks mit UV-Strahlung, wobei kein anschließendes Tempern vorgenommen wird.

22. verfahren zum Bedrucken eines Glas- oder zumindest an seiner Oberfläche glasartigen Substrats mit einer Glasdruckfarbe oder einem Glasdrucklack nach einem der Ansprüche 1 bis 18, umfassend die Schritte:
a) Bedrucken des Glas- oder glasartigen Substrats mit der Glasdruckfarbe bzw. dem Glasdrucklack ohne Verwendung eines Haftvermittlers;
b) Härten der Glasdruckfarbe bzw. des Glasdrucklacks mit UV-Strahlung und gegebenenfalls
c) Nachtempern des bedruckten Glas- oder glasartigen Substrats bei einer Temperatur von 130°C bis 170°C über 20 bis 40 Minuten.

## Claims

1. Glass-printing ink or glass-printing lacquer comprising at least one resin, at least one photoinitiator and at least one additional substance, the resin being a bisphenol-A-based epoxy resin, diluted in a UV-curing monomer, **characterised in that** the at least one additional substance is a wax.

2. Glass-printing ink or glass-printing lacquer according to claim 1, **characterised in that**, in addition to the bisphenol-A-based epoxy resin, there is a resin having functional groups which include free functional amino-, hydroxy-, epoxy-, acid-, acid anhydride- and/or acrylate groups.

3. Glass-printing ink or glass-printing lacquer according to either claim 1 or claim 2, **characterised in that** the wax is at least one from the following group:
polyethylene wax, modified polyethylene wax, high-density polyethylene wax, polymer-silica composite, micronised polyolefin wax, Fischer-Tropsch wax, micronised polytetrafluoroethylene wax, micronised polytetrafluoroethylene/polyethylene wax, amide wax, carnauba wax, montan wax, micronised ester wax having UV-reactive groups, paraffin wax, polypropylene wax, and spray-micronised polyolefin wax.

4. Glass-printing ink or glass-printing lacquer according to any of claims 1 to 3, **characterised in that** the wax is used in a quantity of from 0.1 wt. % to 10.0 wt. % dry weight, based on the weight of the glass-printing ink or glass-printing lacquer.

5. Glass-printing ink or glass-printing lacquer according to claim 4, **characterised in that** the wax is used in a quantity of from 0.5 wt. % to 5.0 wt. % dry weight, based on the weight of the glass-printing ink or glass-printing lacquer.

6. Glass-printing ink or glass-printing lacquer according to claim 5, **characterised in that** the wax is used in a quantity of from 1.0 wt. % to 3.0 wt. % dry weight, based on the weight of the glass-printing ink or glass-printing lacquer.

7. Glass-printing ink or glass-printing lacquer according to any of claims 1 to 6, **characterised in that** the wax is dispersed in the glass-printing ink or glass-printing lacquer.

8. Glass-printing ink or glass-printing lacquer according to any of claims 1 to 6, **characterised in that** the wax is incorporated into the glass-printing ink or glass-printing lacquer by roller.

9. Glass-printing ink or glass-printing lacquer according to any of claims 1 to 8, **characterised in that** the bisphenol-A-based epoxy resin has a weight-average molecular weight in the range of from 700 to 1500.

10. Glass-printing ink or glass-printing lacquer according to any of claims 1 to 9, **characterised in that** the resin having functional groups is a melamine acrylate, an acid-modified polyester acrylate and/or an epoxy acrylate.

11. Glass-printing ink or glass-printing lacquer according to any of claims 1 to 10, **characterised in that** the epoxy resin is used in a quantity of from 1 to 90 wt. %, preferably 5 to 20 wt. % and more particularly 11 to 14 wt. % dry weight, based on the weight of the glass-printing ink or glass-printing lacquer.

12. Glass-printing ink or glass-printing lacquer according to any of claims 1 to 11, **characterised in that** the resin having functional groups is used in a quantity of from 5 to 90 wt. %, preferably 5 to 40 wt. % and more particularly 10 to 30 wt. % dry weight, based on the weight of the glass-printing ink or glass-printing lacquer.

13. Glass-printing ink or glass-printing lacquer according to any of claims 1 to 12, **characterised in that** the photoinitiator(s) is/are present in a total quantity of from 1 to 12 wt. %, more particularly 3 to 7 wt. %, based on the weight of the glass-printing ink or glass-printing lacquer.

14. Glass-printing ink or glass-printing lacquer according to any of claims 1 to 13, **characterised in that** the UV-curing monomer is hexanediol diacrylate.

15. Glass-printing ink or glass-printing lacquer according to any of claims 1 to 14, **characterised in that** it further contains a UV-curing reactive thinner which is different from the UV-curing monomer.

16. Glass-printing ink or glass-printing lacquer according to any of claims 1 to 15, **characterised in that** it further contains a stabiliser.

17. Glass-printing ink or glass-printing lacquer according to any of claims 1 to 16, **characterised in that** it further contains a co-initiator.

18. Glass-printing ink according to any of claims 1 to 17, **characterised in that** it contains one or more pigments or dyes in a quantity of from 0.5 to 50 wt. %, based on the total weight of the ink.

19. Use of a glass-printing ink or glass-printing lacquer according to any of claims 1 to 18 for printing a glass substrate or a substrate that is glass-type at least on its surface.

20. Use according to claim 19, **characterised in that** the glass substrate or glass-type substrate is selected from glass, ceramic and tile.

21. Method for printing a glass substrate or a substrate that is glass-type at least on its surface with a glass-printing ink or glass-printing lacquer according to any of claims 1 to 18, comprising the steps of:
a) optionally pre-treating the glass substrate or glass-type substrate,
b) printing the glass substrate or glass-type substrate with a glass-printing ink or a glass-printing lacquer according to any of claims 1 to 18, an adhesion promoter being mixed into the glass-printing ink or glass-printing lacquer before printing, and
c) curing the glass-printing ink or glass-printing lacquer with UV radiation, no subsequent tempering being performed.

22. Method for printing a glass substrate or a substrate that is glass-type at least on its surface with a glass-printing ink or glass-printing lacquer according to any of claims 1 to 18, comprising the steps of:
a) printing the glass substrate or glass-type substrate with the glass-printing ink or glass-printing lacquer without the use of an adhesion promoter;
b) curing the glass-printing ink or glass-printing lacquer with UV radiation, and optionally
c) post-tempering the printed glass substrate or glass-type substrate at a temperature of from 130 °C to 170 °C for 20 to 40 minutes.

## Revendications

1. Encre d'impression sur verre ou laque d'impression sur verre, comprenant au moins
une résine, au moins un photo-initiateur ainsi qu'au moins une autre substance, où il s'agit, pour la résine, d'une résine époxyde à base de bisphénol A, diluée dans un monomère durcissant aux UV, **caractérisée en ce qu'**il s'agit, pour ladite au moins une autre substance, d'une cire.

2. Encre d'impression sur verre ou laque d'impression sur verre selon la revendication 1, **caractérisée en ce qu'**elle contient, en plus de la résine époxyde à base de bisphénol A, une résine présentant des groupes fonctionnels, qui présente des groupes fonctionnels libres amino, hydroxy, époxyde, acide, anhydride d'acide et/ou acrylate.

3. Encre d'impression sur verre ou laque d'impression sur verre selon la revendication 1 ou 2, **caractérisée en ce que** la cire est au moins une cire du groupe suivant :
une cire de polyéthylène, une cire de polyéthylène modifiée, une cire de polyéthylène haute densité, un composé polymère-silice, une cire micronisée de polyoléfine, une cire de Fischer-Tropsch, une cire micronisée de polytétrafluoroéthylène, une cire micronisée de polytétrafluoroéthylène/polyéthylène, une cire d'amide, une cire de caroube, une cire de montane, une cire micronisée d'ester présentant des groupes réactifs aux UV, une cire de paraffine, une cire de polypropylène, une cire micronisée par pulvérisation de polyoléfine.

4. Encre d'impression sur verre ou laque d'impression sur verre selon l'une quelconque des revendications 1 à 3, **caractérisée en ce que** la cire est utilisée en une quantité de 0,1% en poids à 10,0% en poids de poids sec, par rapport au poids de l'encre d'impression sur verre ou de la laque d'impression sur verre.

5. Encre d'impression sur verre ou laque d'impression sur verre selon la revendication 4, **caractérisée en ce que** la cire est utilisée en une quantité de 0,5% en poids à 5,0% en poids de poids sec, par rapport au poids de l'encre d'impression sur verre ou de la laque d'impression sur verre.

6. Encre d'impression sur verre ou laque d'impression sur verre selon la revendication 5, **caractérisée en ce que** la cire est utilisée en une quantité de 1,0% en poids à 3,0% en poids de poids sec, par rapport au poids de l'encre d'impression sur verre ou de la laque d'impression sur verre.

7. Encre d'impression sur verre ou laque d'impression sur verre selon l'une quelconque des revendications 1 à 6, **caractérisée en ce que** la cire est dispersée dans l'encre d'impression sur verre ou, selon le cas, la laque d'impression sur verre.

8. Encre d'impression sur verre ou laque d'impression sur verre selon l'une quelconque des revendications 1 à 6, **caractérisée en ce que** la cire est introduite par laminage dans l'encre d'impression sur verre ou, selon le cas, la laque d'impression sur verre.

9. Encre d'impression sur verre ou laque d'impression sur verre selon l'une quelconque des revendications 1 à 8, **caractérisée en ce que** la résine époxyde à base de bisphénol A présente une moyenne pondérale du poids moléculaire dans la plage de 700 à 1500.

10. Encre d'impression sur verre ou laque d'impression sur verre selon l'une quelconque des revendications 1 à 9, **caractérisée en ce qu'**il s'agit, pour la résine présentant des groupes fonctionnels, d'un acrylate de mélamine, d'un polyester-acrylate modifié par un acide et/ou d'un époxyacrylate.

11. Encre d'impression sur verre ou laque d'impression sur verre selon l'une quelconque des revendications 1 à 10, **caractérisée en ce que** la résine époxyde est utilisée en une quantité de 1 à 90% en poids, de préférence de 5 à 20% en poids et en particulier de 11 à 14% en poids de poids sec, par rapport au poids de l'encre d'impression sur verre ou de la laque d'impression sur verre.

12. Encre d'impression sur verre ou laque d'impression sur verre selon l'une quelconque des revendications 1 à 11, **caractérisée en ce que** la résine présentant des groupes fonctionnels est utilisée en une quantité de 5 à 90% en poids, de préférence de 5 à 40% en poids et en particulier de 10 à 30% en poids de poids sec, par rapport au poids de l'encre d'impression sur verre ou de la laque d'impression sur verre.

13. Encre d'impression sur verre ou laque d'impression sur verre selon l'une quelconque des revendications 1 à 12, **caractérisée en ce que** le ou les photo-initiateurs se trouvent en une quantité totale de 1 à 12% en poids, en particulier de 3 à 7% en poids, par rapport au poids de l'encre d'impression sur verre ou de la laque d'impression sur verre.

14. Encre d'impression sur verre ou laque d'impression sur verre selon l'une quelconque des revendications 1 à 13, **caractérisée en ce que** le monomère durcissant aux UV est le diacrylate d'hexanediol.

15. Encre d'impression sur verre ou laque d'impression sur verre selon l'une quelconque des revendications 1 à 14, **caractérisée en ce qu'**elle contient en outre un monomère durcissant aux UV différent du diluant réactif durcissant aux UV.

16. Encre d'impression sur verre ou laque d'impression sur verre selon l'une quelconque des revendications 1 à 15, **caractérisée en ce qu'**elle contient en outre un stabilisant.

17. Encre d'impression sur verre ou laque d'impression sur verre selon l'une quelconque des revendications 1 à 16, **caractérisée en ce qu'**elle contient en outre un co-initiateur.

18. Encre d'impression sur verre selon l'une quelconque des revendications 1 à 17, **caractérisée en ce qu'**elle contient un ou plusieurs pigments ou colorants en une quantité de 0,5 à 50% en poids, par rapport au poids total de l'encre.

19. Utilisation d'une encre d'impression sur verre ou d'une laque d'impression sur verre selon l'une quelconque des revendications 1 à 18 pour l'impression d'un substrat en verre ou du moins de type verre sur sa surface.

20. Utilisation selon la revendication 19, **caractérisée en ce que** le substrat en verre ou de type verre est choisi parmi le verre, la céramique et les carreaux.

21. Procédé pour l'impression d'un substrat en verre ou du moins de type verre sur sa surface par une encre d'impression sur verre ou une laque d'impression sur verre selon l'une quelconque des revendications 1 à 18, comprenant les étapes :
a) le cas échéant de prétraitement du substrat en verre ou de type verre ;
b) d'impression du substrat en verre ou de type verre par une encre d'impression sur verre ou une laque d'impression sur verre selon l'une quelconque des revendications 1 à 18, en délayant, avant l'impression, un promoteur d'adhérence dans l'encre d'impression sur verre ou la laque d'impression sur verre, et
c) de durcissement de l'encre d'impression sur verre ou de la laque d'impression sur verre par un rayonnement UV, sans procéder à un traitement thermique consécutif.

22. Procédé pour l'impression d'un substrat en verre ou du moins de type verre sur sa surface par une encre d'impression sur verre ou une laque d'impression sur verre selon l'une quelconque des revendications 1 à 18, comprenant les étapes :
a) d'impression du substrat en verre ou de type verre par l'encre d'impression sur verre ou, selon le cas, la laque d'impression sur verre sans utiliser de promoteur d'adhérence ;
b) de durcissement de l'encre d'impression sur verre ou, selon le cas, de la laque d'impression sur verre par un rayonnement UV et, le cas échéant
c) de post-traitement thermique du substrat imprimé en verre ou de type verre à une température de 130°C à 170°C pendant 20 à 40 minutes.
